# EUROPEAN PATENT SPECIFICATION

(11) **EP 1 316 229 B1**
(45) Date of publication and mention of the grant of the patent: **13.08.2008**
(21) Application number: 01944064.3
(22) Date of filing: 21.06.2001
(51) Int. Cl.: H04Q 7/20, H04L 9/00

(54) **ACCESS CONTROL FOR COMMUNICATION IN A RADIO COMMUNICATION SYSTEM WITH SHORT RANGE**
ZUGANGSSTEUERUNG FÜR DIE KOMMUNIKATION IN EINEM FUNKKOMMUNIKATIONSSYSTEM MIT KURZER REICHWEITE
CONTROLE D'ACCES DESTINE A DES COMMUNICATIONS DANS UN SYSTEME DE RADIO-COMMUNICATION DE FAIBLE PORTEE

(30) Priority: 14.07.2000 SE 0002655
(43) Date of publication of application: 04.06.2003
(73) Proprietor: TELIASONERA AB, 106 63 Stockholm (SE)
(72) Inventor: ANDERSIN, Mikael, S-118 64 Stockholm (SE); STAF, Oskar, S-211 42 Malmö (SE); STRANDH, Magnus, S-222 37 Lund (SE)
(74) Representative: Hopfgarten, Nils
(86) International application number: PCT/SE2001/001453
(87) International publication number: WO 2002/007462

(56) References cited:
- EP-A2- 0 708 547
- WO-A1-99/41876
- WO-A2-00/76120
- DE-C1- 19 961 793
- J.C. HAARTSEN: 'The Bluetooth radio system' IEEE PERSONAL COMMUNICATIONS vol. 7, no. 1, February 2000, pages 28 - 36, XP000908653
- JAAP HAARTSEN: 'Bluetooth - The universal radio interface for adhoc, wireless connectivity' ERICSSON REVIEW vol. 75, no. 3, 1998, pages 110 - 117, XP000783249
- THOMAS MULLER: 'Bluetooth security architecture, Version 1.0', [Online] 15 July 1999, Retrieved from the Internet: <URL:http://www.bluetooth.com>

## Description

### FIELD OT THE INVENTION

The invention relates to a method and a system for control and configuration of access between terminals which want to communicate in a short-range radio communication system , and particularly access control of Bluetooth products via an access control server.

### BACKGROUND

Bluetooth is a concept for short range radio communication which has been received with great attention lately and which at the same time has been developed very rapidly. From previously having been run by a closed consortium with a few operators, Ericsson, Nokia and some others, today several hundreds of operators are involved in developing products within the field. Bluetooth will for instance be used to connects different kinds of units with each other. Examples of this are:
- Computer with mobile telephone
- Mobile telephone with printer
- Mobile telephone with portable handsfree
- Computer with camera, etc.
The technology also will be used to create small temporary networks, so called ad hoc networks. The possibilities are generally speaking innumerable, and it is actually only imagination which limits what can be achieved by Bluetooth.

One important aspect in this matter is security. It is of course of great importance to secure that different products with Bluetooth in them cannot communicate with each other just anyhow. In the Bluetooth concept this has been solved by each Bluetooth unit having a. unique identity number BD_ADDR which is determined according to the standard IEEE 802. It can be said to correspond to IMSI in GSM. In each Bluetooth unit there also will be support for the unit keeping account on which other Bluetooth units it is allowed to communicate with.

The document T. Muller, 'Bluetooth Security Architecture, Version 1.0', 15 July 1999 thus deals with the security in Bluetooth radio communication systems. A security manager is described which during the connection set-up checks if a first unit is allowed to have access to a second device.

In the near future it will possible to predict that there will be such a lot of products of different kinds with Bluetooth components in them that each unit has to be configured for those components with which they shall be able to communicate via Bluetooth. This may apply both at home and at the company. This results in a big administrative problem which clearly risks becoming inflexible if it at the same time shall be secure.

The present invention intends to solve this problem.

Different systems and methods for access control in different types of communication networks have been described. One example is US 5,999,978 in the name of Angal et al, in which access control in a computer network is discussed. An access server controls the access of the terminals depending on information in an access database. In EP 935221 by Mitsubishi, a system is shown in which users authenticate themselves by means of biometrical sensors, for instance finger print readers, to be allowed to communicate in a network. In WO 98/20646 a system is described in which each computer in a network has an IP-address of its own, and that the access rights of these computers are defined in a table. Some other documents in the field are WO 98/57510, JP,A, 09-130397, JP,A, 10-232811 and JP,A, 11-024978.

None of these documents, however, deal with the problems which the present invention does, nor are there shown any solutions which might be applied to these problems. Access control within networks with short range, for instance Bluetooth, has a lot of problems. Firstly, the communication technology Bluetooth is primarily intended for portable units. These are, for weight and space reasons, often small and have limited processing power, storing capacity and power consumption. Consequently one does not want to load these terminals with such that can be handled by stationary units. Secondly, the in the system, that is Bluetooth, including units having no possibility of continuous contact, as for instance mobile stations in a cellular mobile telephone system. In such a system, for instance GSM, the coverage areas, the cells, are overlapping, and they are defined by stationary network units, base stations. The fixed network is there all the time, and all information in that is always accessible, provided that one is authorized for it. In Bluetooth, temporary, limited networks are created, and there is in such a network normally no guarantee for which capacities for control of the network that will exist, nor which type of information that is accessible in the network, in the way one in GSM more or less always has contact with a Service Provider, SP, who provides the network services.

These are further some of the problems the invention intends to solve.

### SUMMARY OF THE INVENTION

With the aim to solve above mentioned problems, the present invention according to one aspect relates to a method for access control of direct communication in a first short-range radio communication system between a first unit with a first identity in said first radio communication system and a second unit with a second identity in said first radio communication system,
characterized by in the following steps to :
- the first unit transmits, via said first radio communication system, information regarding its identity to the second unit, with to which the first unit wants to communicate;
- the second unit transmits an access request to an access control server, via a secure connection on a carrier in a second communication system, which access request includes information regarding said first identity and said second identity ;
- the access control server checkes, in a memory, to which units said second units has access rights to communicate with in said first radio communication system;
- the access control server transmits access information to the second unit via said secure connection in the second communication system, regarding the second unit's right to communicate with the first unit in the first radio communication system; and
- direct communication is accepted and initiated between the first unit and the second unit (2) via said first radio communication system depending on said access information.

In one embodiment the step to transmit access information is preceded by the step to in said access control device store said access information in a memory. The step to transmit access information to the second unit is initiated in one embodiment by the access control device. In another embodiment the step to transmit access information is preceded by the step to transmit an access request from the second unit to said access control unit, which access request includes information about said first identity and said second identity.

In a preferred embodiment said access control server is administered/managed by a certified authority. Said second unit communicates in one embodiment with the access control server via a carrier in a wireless, cellular communication network, and in an alternative embodiment via a wire/cable-based communication network.

According to a second aspect, the invention relates to an access control system for direct communication between units in a first short-range radio communication system , including
- a first unit arranged with a first communication device with a first identity in said first radio communication system ;
- a second unit arranged with a second communication device with a second identity in said first radio communication system, which first and second communication devices are arranged to directly communicate with each other in said first radio communication system;
- an access control server including storing devices which store access information regarding which units said second unit has access rights to communicate with in said first radio communication system, said access control server including a third communication device connected to said storing device and said second unit including a fourth communication device, wherein said third and fourth communication devices are arranged to communicate with each other via a secure connection in a second communication system, said third communication device being arranged to receive an access request from said fourth communication device, which access request includes said first and second identity, and to transmit said access information to said fourth communication device depending on the access request.

The access control server according to one embodiment includes processing/action devices connected to said storing device and third communication device, arranged to derive said access information in said storing device depending on said access request.

In another embodiment, where the access control server also includes processing/action devices connected to said storing device and third communication device, said processing/action devices are arranged to derive said access information in said storing device and to initiate transmission of the access information depending on preset parameters. Said parameters can include preset time intervals for transmission, or information about new stored access information, at which a transmission is made for instance at each new stored information regarding the access to the second unit.

Said second communication system is in one embodiment a wireless, cellular communication network, but can also include a wire/cable-based communication network.

### BRIEF DESCRIPTION OF THE DRAWINGS

Preferred embodiments of the invention are described in detail below, with, at the same time, reference to enclosed drawing, at which:

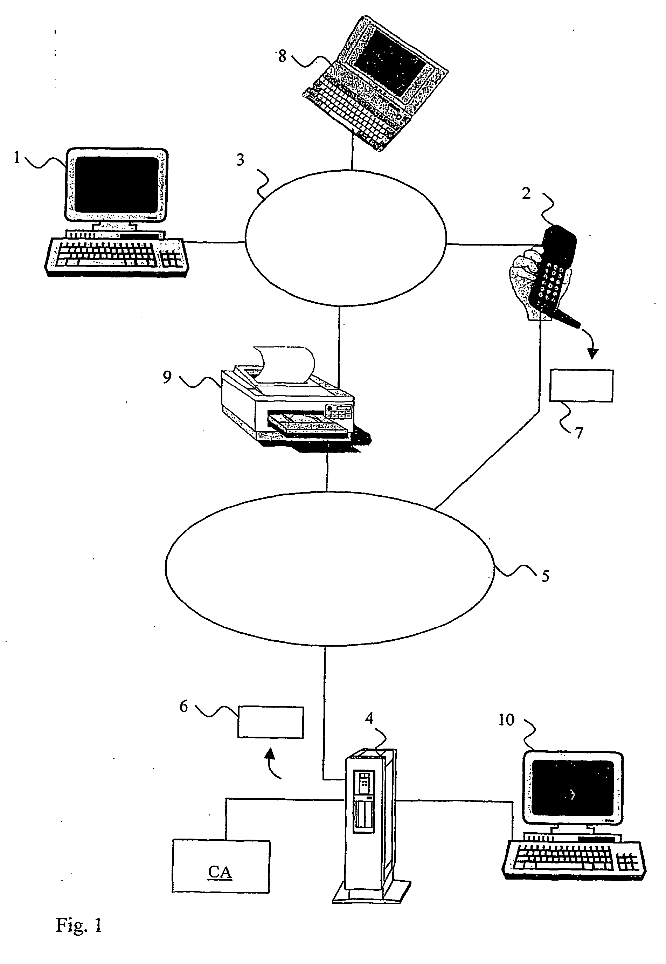

Figure 1 schematically illustrates Bluetooth-terminals and an access server according to one embodiment of the present invention.

### DETAILED DESCRIPTION OF PREFERRED EMBODIMENTS

The idea of the invention simply is, via different carriers, to configure and provide access for products which communicate by/with Bluetooth. Such carriers can for instance be SMS, GPRS, WAP, UMTS, or http. As a suggestion the technology is implemented by a server solution where one has a BCAC server (Bluetooth Configuration and Access Control) which communicates with products which have Bluetooth-products in them. The unique feature is that the communication to secure the access rights is made over a secure connection, in contrast to the Bluetooth-interface itself, which is shared by all products within communication range.

In Figure 1 is schematically illustrated an example of an embodiment of the invention where a computer 1 detects the existence of a mobile telephone 2 via Bluetooth 3, and wants to communicate with it. The mobile telephone 2 is configured and is given access control from the BCAC-server 4 via a suitable carrier 5, in this case as a suggestion SMS. The server 4 transmits a message Access Granted 6 which allows that the unit 2, that is the mobile telephone, with Bluetooth-address x is allowed to communicate with the unit 1, that is the computer, which has Bluetooth-address y. The Access Granted-message 6 can be preceded by a request 7 from the unit 2 to the server 4, which preferably is initiated by the mobile telephone 2 having detected the existence of computer 1 and address y. Also this request 7 is transmitted over the secured connection via the carrier 5. The technology will be of particular interest if the BCAC-server 4 is under control by a certified authority like Certification Authorities CA in the Internet world.

The invention may be used in a number of situations. One example concerns system administration. In most cases companies have a system administrator/manager who administrates/manages the IT-systems at the company. By means of a BCAC-server connected to different computer products, the person in question can easier administrate equipment which communicates by means of the Bluetooth-technology. Via, for instance, a computer connected to the BCAC-server, the administrator can decide which units that shall be able to communicate with each other, for instance that mobile telephones which belong to persons who are located on a certain floor shall be able to communicate with the printer on the same floor.

In some cases it may be of interest to companies to allow visitors who are visiting to make use of the own internal infrastructure. A customer may, for instance, want to print a document from his/her computer 8, which he/she has brought along with him/her, on the printer of the company 9, or from the computer 8 be able to show a presentation via the fixed installed OH-projector of the company. This must be possible to effect in a secure way, since the visiting customer only shall have access to a limited amount of equipment. In addition it is desirable with maximal flexibility so that for instance a receptionist need not running around to assist the visiting customer. According to the present invention this is achieved by, for instance, the receptionist via his/her computer 10 being connected to the BCAC-server 4, by which the receptionist attends to that the units 9 which may be of interest to the visitor are configured so that the visitor can use them. This configuration includes the transmission of the visitor's computer's 8 Blue tooth identity BD-ADDR. The BCAC-server 4 also can be located with an external Service Provider, SP, at which the communication between the company and the SP is made via a secure connection, for instance an IPSsec-connection.

In the future it then may be just as naturally to give/state identity number of one's Bluetooth-products which one wants to use as one today gives/states the registration number of the car when parking at the parking bay for visitors.

The solution that is suggested in the present invention will be particularly interesting if Bluetooth is used in public environments, for instance a printer which is located at a public place in the city/town, for instance at the post office or the like. By having all customers of an SP in a BCAC-server, all one's customers can be offered automatic access to equipment which is managed by the BCAC-server. When more equipment is installed in public environments one need not configure all the units that shall communicate with the equipment each, but this is made centrally via the BCAC-server.

Preferred embodiments of the invention have been described in form of examples, but it is to the expert evident that the suggested solution can be modified within the concept according to the invention. Further, the expert will realize that the suggested solution can be applied also to other communication systems with short range, for instance the RTI-system (Road Traffic Informatics), which consequently is covered by the protection scope of the invention, the protection scope of which is only limited by the enclosed patent claims.

## Claims

1. Method for access control of direct communication in a first short-range radio communication system (3) between a first unit (1) with a first identity (y) in said first radio communication system and a second unit (2) with a second identity (x) in said first radio communication system (3),
**characterized by** the following steps :
- the first unit (1) transmits, via said first radio communication system (3), information regarding its identity (x) to the second unit (2), with which the first unit wants to communicate;
- the second unit (2) transmits an access request (7) to an access control server (4), via a secure connection on a carrier in a second communication system (5), which access request (7) includes information regarding said first identity (x) and said second identity (y);
- the access control server (4) checks, in a memory, to which units said second units (2) has access rights to communicate with in said first radio communication system (3);
- the access control server (4) transmits access information (6) to the second unit (2), via said secure connection in the second communication system (5), regarding the second unit's (2) right to communicate with the first unit (1) in the first radio communication system (3); and
- direct communication is accepted and initiated between the first unit (1) and the second unit (2) via said first radio communication system (3) depending on said access information (6).

2. Method as claimed in claim 1, wherein said access control server is administered/managed by a certified authority (CA).

3. Method as claimed in claim 1, wherein said second unit communicates with the access control server via a carrier in a wireless cellular communication network.

4. Method as claimed in claim 1, wherein said second unit communicates with.the access control server via a wire/cable based communication network.

5. Method as claimed in claim 1, wherein said radio communication system(3) is Bluetooth system.

6. Access control system for direct communication between units in a first short-range radio communication system (3) , including
- a first unit (1) arranged with a first communication device with a first identity (y) in said first radio communication system (3);
- a second (2) unit arranged with a second communication device with a second identity (x) in said first radio communication system (3), which first and second communication devices are arranged to directly communicate with each other in said first radio communication system;
- an access control server (4) including storing devices which store access information (6) regarding which units (1) said second unit (2) has access rights to communicate with in said first radio communication system (3), said access control server (4) including a third communication device connected to said storing device and said second unit including a fourth communication device, wherein said third and fourth communication devices are arranged to communicate with each other via a secure connection in a second communication system (5), said third communication device being arranged to receive an access request (7) from said fourth communication device, which access request includes said first (y) and second (x) identity, and to transmit said access information (6) to said fourth communication device depending on the access request.

7. Access control system as claimed in claim 6, including processing/action devices connected to said storing device and third communication device, arranged to derive said access information in said storing device depending on said access request.

8. Access control system as claimed in claim 6, including processing/action devices connected to said storing device and third communication device, arranged to derive said access information in said storing device and to initiate transmission of the access information depending on preset parameters.

9. Access control system as claimed in claim 8, where said parameters include preset time intervals.

10. Access control system as claimed in claim 8, where said parameters include information about new stored access information.

11. Access control system as claimed in claim 6, wherein said second communication system is a wireless cellular communication network.

12. Access control system as claimed in claim 6, wherein said second communication system is a wire/cable-based communication network.

13. Access control system as claimed in claim 6, wherein said first radio communication system (3) is Bluetooth.

## Patentansprüche

1. Verfahren für Zugangskontrolle direkter Kommunikation in einem ersten kursreichweitigen Funkkommunikationssystem (3) zwischen einer ersten Einheit (1) mit einer: ersten Identität (y) in dem ersten Funkkommunikationssystem und einer zweiten Einheit (2) mit einer zweiten Identität (x) in dem ersten Funkkommunikationssystem (3),
**gekennzeichnet durch** die folgenden Schritte:
- die erste Einheit (1) sendet über das erste Funkkommunikationssystem (3) Informationen, die ihre Identität (x) betrifft, zur zweiten Einheit (2), mit der die erste Einheit kommunizieren will;
- die zweite Einheit (2) sendet eine Zugangsanforderung (7) zu einem Zugangskontrollserver (4) über eine sichere Verbindung auf einem Träger in einem zweiten Kommunikationssystem (5), welche Zugangsanforderung (7) Information einschließt, die die erste Identität (x) und die zweite Identität (y) betrifft;
- der Zugangskontrollserver (4) prüft in einem Speieher, zu welchen Einheiten die zweiten Einheiten (2) Zugangsrechte haben, mit dem ersten Funkkommunikationssystem (3) zu kommunizieren;
- der Zugangskontrollserver (4) sendet Zugangsinformation (6) zur zweiten Einheit (2) über die sichere Verbindung in dem zweiten Kommunikationssystem (5), die das Recht der zweiten Einheit (2) betreffen, mit der ersten Einheit (1) in dem ersten Funkkornmunikationssystem (3) zu kommunizieren; und
- direkte Kommunikation wird angenommen und eingeleitet zwischen der ersten Einheit (1) und der zweiten Einheit (2) über das erste Funkkommunikationssystem (3) in Abhängigkeit von der Zugangsinformation (6).

2. Verfahren nach Anspruch 1, bei dem der Zugangskontrollserver durch eine zertifizierte Autorität oder Behörde (CA) verwaltet/geleitet wird.

3. Verfahren nach Anspruch 1, bei dem die zweite Einheit mit dem Zugangskontrollserver über einen Träger in einem drahtlosen zellularen Kommunikationsnetz kommuniziert.

4. Verfahren nach Anspruch 1, bei dem die zweite Einheit mit dem Zugangskontrollserver über ein auf Draht/Kabel beruhendes Kommunikationsnetz kommuniziert.

5. Verfahren nach Anspruch 1, bei dem das Funkkommunikationssystem (3) das Bluetooth-System ist.

6. Zugangskontrollsystem für direkte Kommunikation zwischen Einheiten in einem ersten kurzreichweitigen Funkkommunikationssystem (3), das einschließt
- eine erste Einheit (1), die mit einer ersten Kommunikationseinrichtung mit einer ersten Identität (y) in dem ersten Funkkommunikationssystem (3) angeordnet ist;
- eine zweite (2) Einheit, die mit einer zweiten Kommunikationseinrichtung mit einer zweiten Identität (x) in dem ersten funkkommunikationssystem (3) angeordnet ist, welche ersten und zweiten Kommunikationseinrichtungen dazu ausgebildet sind, direkt miteinander in dem ersten Funkkommunikationssystem zu kommunizieren;
- einen Zugangskontrollserver (4), der Speichereinrichtungen einschließt, die Zugangsintormation (6) bezüglich darüber speichern, mit welchen Einheiten (1) die zweite Einheit (2) Zugangsrechte zum Kommunizieren mit denselben in dem ersten Funkkommunikationssystem (3) hat, welcher Zugangskontrollserver (4) eine dritte Kommunikationseinrichtung einschließt, die mit der Speichereinrichtung verbunden ist, und welche zweite Einheit eine vierte Kommunikationseinrichtung einschließt, wobei die dritten und vierten Kommunikationseinrichtungen dazu ausgebildet sind, miteinander über eine sichere Verbindung in einem zweiten Kommunikationssystem (5) zu kommunizieren, wobei die dritte Kommunikationseinrichtung dazu ausgebildet ist, eine Zugangsanforderung (7) von der vierten Kommunikationseinrichtung zu empfangen, welche Zugangsanforderung die erste (y) und zweite (x) Identität einschließt, und die Zugangsinformation (6) zu der vierten Kommunikationseinrichtung in Abhängigkeit von der Zugangsanforderung zu übertragen.

7. Zugangskontrollsystem nach Anspruch 6, das Verarbeitungs/Funktionseinrichtungen hat, die mit der Speichereinrichtung und der dritten Kommunikationseinrichtung verbunden sind, die dazu ausgebildet sind, die Zugangsinformation in der Speichereinrichtung in Abhängigkeit von der Zugangsanforderung abzuleiten.

8. Zugangskontrollsystem nach Anspruch 6, das Verarbeitungs/Funktionseinrichtungen aufweist, die mit der Speichereinrichtung und der dritten Kommunikationseinrichtung verbunden sind und dazu ausgebildet sind, die Zugangsinformation in der Speichereinrichtung abzuleiten und Übertragung der Zugangsinformation in Abhängigkeit von voreingestellten Parametern zu initiieren.

9. Zugangskontrollsystem nach Anspruch 8, wo die Parameter voreingestellte Zeitintervalle einschließen.

10. Zugangskontrollsystem nach Anspruch 8, wo die Parameter Information über neue gespeicherte Zugangsinformation einschließen.

11. Zugangskontrollsystem nach Anspruch 6, bei dem das zweite Kommunikationssystem ein drahtloses zellulares Kommunikationsnetz ist.

12. Zugangskontrollsystem nach Anspruch 6, bei dem das zweite Kommunikationssystem ein auf Draht/Kabel beruhendes Kommunikationsnetz ist.

13. Zugangskontrollsystem nach Anspruch 6, bei dem das erste Kommunikationssystem (3) Bluetooth ist.

## Revendications

1. Méthode de contrôle d'accès pour communication directe dans un premier système de radiocommunication de faible portée (3), entre une première unité (1) ayant une première identité (y) dans le dit premier système de radiocommunication et une deuxième unité (2) ayant une deuxième identité (x) dans le dit premier système de radiocommunication (3),
**caractérisée par** les étapes suivantes :
- la première unité (1) transmet, via le dit premier système de radiocommunication (3), des informations concernant son identité (x) à la deuxième unité (2), avec laquelle la première unité désire communiquer;
- la deuxième unité (2) transmet une demande d'accès (7) à un serveur de contrôle d'accès (4), via une connexion sûre sur un support dans un deuxième système de communication (5), cette demande d'accès (7) incluant des informations en ce qui concerne la dite première identité (x) et la dite deuxième identité (y) ;
- le serveur de contrôle d'accès (4) vérifie, dans une mémoire, avec quelles unités la dite deuxième unité (2) a des droits d'accès pour communiquer, dans le dit premier système de radiocommunication (3) ;
- le serveur de contrôle d'accès (4) transmet des informations d'accès (6) à la deuxième unité (2), via la dite connexion sûre dans le deuxième système de communication (5), en ce qui concerne le droit de la deuxième unité (2) à communiquer avec la première unité (1) dans le premier système de radiocommunication (3) ; et
- une communication directe est acceptée et démarrée entre la première unité (1) et la deuxième unité (2) via le dit premier système de radiocommunication (3) en fonction des dites informations d'accès (6).

2. Méthode selon la revendication 1, dans laquelle le dit serveur de contrôle d'accès est administré / géré par une autorité certifiée (CA).

3. Méthode selon la revendication 1, dans laquelle la dite deuxième unité communique avec le serveur de contrôle d'accès via une porteuse dans un réseau de communication cellulaire sans fil.

4. Méthode selon la revendication 1, dans laquelle la dite deuxième unité communique avec le serveur de contrôle d'accès via un réseau de communication à base de fil / câble.

5. Méthode selon la revendication 1, dans laquelle le dit système de radiocommunication (3) est un système Bluetooth.

6. Système de contrôle d'accès pour communication directe entre unités dans un premier système de radiocommunication de faible portée (3), comprenant :
- une première unité (1) agencée avec un premier dispositif de communication ayant une première identité (y) dans le dit premier système de radiocommunication (3) ;
- une deuxième unité (2) agencée avec un deuxième dispositif de communication ayant une deuxième identité (x) dans le dit premier système de radiocommunication (3), ces premier et deuxième dispositifs de communication étant agencés pour communiquer directement l'un avec l'autre dans le dit premier système de radiocommunication ;
- un serveur de contrôle d'accès (4) incluant des dispositifs de mémoire qui stockent des informations d'accès (6) concernant les unités (1) avec lesquelles la dite deuxième unité (2) a des droits d'accès pour communiquer dans le dit premier système de radiocommunication (3), le dit serveur de contrôle d'accès (4) incluant un troisième dispositif de communication connecté au dit dispositif de mémoire et la dite deuxième unité incluant un quatrième dispositif de communication, dans lequel les dits troisième et quatrième dispositifs de communication sont agencés pour communiquer l'un avec l'autre via une connexion sûre dans un deuxième système de communication (5), le dit troisième dispositif de communication étant agencé pour recevoir une demande d'accès (7) provenant du dit quatrième dispositif de communication, cette demande d'accès comprenant les dites première (y) et deuxième (x) identités, et pour transmettre les dites informations d'accès (6) au dit quatrième dispositif de communication en fonction de la demande d'accès.

7. Système de contrôle d'accès selon la revendication 6, incluant des dispositifs de traitement / action connectés au dit dispositif de mémoire et au dit troisième dispositif de communication, agencés pour obtenir les dites informations d'accès dans le dit dispositif de mémoire en fonction de la dite demande d'accès.

8. Système de contrôle d'accès selon la revendication 6, incluant des dispositifs de traitement / action connectés au dit dispositif de mémoire et au dit troisième dispositif de communication, agencés pour obtenir les dites informations d'accès dans le dit dispositif de mémoire et pour déclencher la transmission des informations d'accès en fonction de paramètres pré-établis.

9. Système de commande d'accès selon la revendication 8, dans lequel les dits paramètres comprennent des intervalles de temps pré-établis.

10. Système de contrôle d'accès selon la revendication 8, dans lequel les dits paramètres comprennent des informations concernant des informations d'accès nouvellement stockées.

11. Système de contrôle d'accès selon la revendication 6, dans lequel le dit deuxième système de communication est un réseau de communication cellulaire sans fil.

12. Système de contrôle d'accès selon la revendication 6, dans lequel le dit deuxième système de communication est un réseau de communication par fils / câbles.

13. Système de contrôle d'accès selon la revendication 6, dans lequel le dit premier système de radiocommunication (3) est Bluetooth.
